# EUROPEAN PATENT SPECIFICATION

(11) **EP 3 730 195 B1**
(45) Date of publication and mention of the grant of the patent: **25.12.2024**
(21) Application number: 18892240.5
(22) Date of filing: 14.12.2018
(51) Int. Cl.: A63B 63/00, A63B 61/00, A63B 71/06, F21K 9/20, F21S 4/15, F21V 19/00, F21V 21/008, F21V 23/00, G09F 9/33

(54) **IMPROVEMENT FOR AN ILLUMINATED SPORTS NET**
VERBESSERUNG FÜR EIN BELEUCHTETES SPORTNETZ
AMÉLIORATION APPORTÉE À UN FILET DE SPORT LUMINEUX

(30) Priority: 18.12.2017 BR 202017027372 U
(43) Date of publication of application: 28.10.2020
(73) Proprietor: Cardoso, Wagner de Amorim, 11075-721 Santos (BR); Barros, Maria Luiza Paes De, 04003-043 São Paulo (BR)
(72) Inventor: Cardoso, Wagner de Amorim, 11075-721 Santos (BR); Barros, Maria Luiza Paes De, 04003-043 São Paulo (BR)
(74) Representative: Ramos Lucas, Maria Manuel
(86) International application number: PCT/BR2018/050464
(87) International publication number: WO 2019/119094

(56) References cited:
- EP-A1- 1 241 654
- WO-A1-2016/153311
- WO-A2-00/03766
- BR-A2- 102015 002 247
- CN-U- 202 490 403
- DE-A1- 102009 056 915
- DE-A1- 102010 052 995
- DE-B4- 102008 063 697
- FR-A3- 2 964 040
- US-A- 5 280 904
- US-B2- 8 599 104

## Description

The present invention is related to a set of strips connected to a box, equipped with a cover and pivot pins in order to equipped with a lid and hinged pins to accommodate LEDs, which when assembled together will form a luminous sports network capable of generating images preferably inside the goal area, with high impact resistance and high tensile strength, either against the impact of the ball on the net, or due to the effect of the player's speed in the desire to score the goal

### TECHNICAL AREA

As we all know, football is a sport that attracts the attention of a large number of spectators. Considering this fact, the transmission of advertisements becomes extremely valuable in these spaces. In this sense we can mention patent document "BR 10 2015 002247-6", denominated "MIDIA LUMINOSA APLICADA EM REDE ESPORTIVA, PARA STSTEMA DE VEICULAÇÃO DE PROPAGANDA", consisting of a luminous medium made up of a web/mesh - optical fiber, and - textile yarns/fibers, e-tricot, electroluminescent, etc., or preferably LED strips, arranged for illumination that is ordered to reproduce a certain logo, advertising, informative messages or similar. The media has a receiver communicating with a processor. After being attached by a clip, interlacing, or other common joining means to the surface of the sports net mesh, the media is maintained in such a mode that the luminosity is strategically oriented to the view of the public. In this condition, the processor containing its logical properly predefined program, is attached to an area that allows communication by radio frequency with the receiver of said luminous media so when a goal is scored, the processor emits the signal which is received and read by the receiver of the luminous media. This luminous media then reproduces the luminosity by lighting the LEDs arranged in a precise order to form the image of the logo to be conveyed. Consequently an effective mode of exposure
to a plurality of advertisements is guaranteed, taking advantage of a fundamental item which is the sports net to disseminate through the LEDs the sports messages in matches of football, tennis, volleyball, etc., in many spaces like gyms, arenas, stadiums, etc.

It should be also considered that as this media is a system attached to conventional nets, it suffers serious damage due to the effect caused by impact of the ball on the net at the inside area of the goal and this ends up compromising (breaking) all the electronic parts, such as the cables and welds that form the luminous mesh making its application to be less efficient, besides not satisfying the legal criteria that rule these sports, one of them being the prohibition of aggregates to the nets that are part of the goal structure.

In order to solve these problems the same inventor developed and filled the patent application "APERFEIÇOAMENTO INTRODUZIDO EM REDE ESPORTIVA" with number BR 20 2017 015643 0, which provides a mesh formed by strips of fabric, which when crossing receive seam points forming a mesh capable of wrapping by velcro the cable harness of the LEDs, which in turn, remain exposed.

It was found that such improvement does not offer an effective shielding for the LEDs, not even for its cables harness, so all electronic parts are extremely vulnerable to impacts and pulls by the players.

### SUMMARY OF INVENTION

In face of such inconvenience the inventor has developed this invention, formed by a set of strips, cover, case and pivot pins, in order to accommodate LEDs, which when assembled, will form a luminous sports net capable of generating images preferably inside the goal area, with high impact resistance and high tensile strength, either against the impact of the ball on the net, or by the resulting effect of the player speed in the desire to score the points.

After being explained superficially, the present application is better detailed by referring to the accompanying drawings which show:
Figure I - exploded view of the assembly. In this view, the case is observed with its strips aligned with its cutouts, as well as the protective strips aligned with its respective side strips and the cover aligned with the edge of the case, and detail "A" shows a bottom view of the cover;

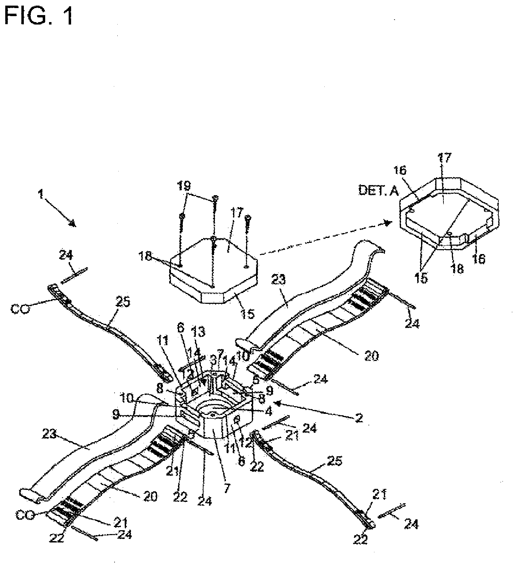

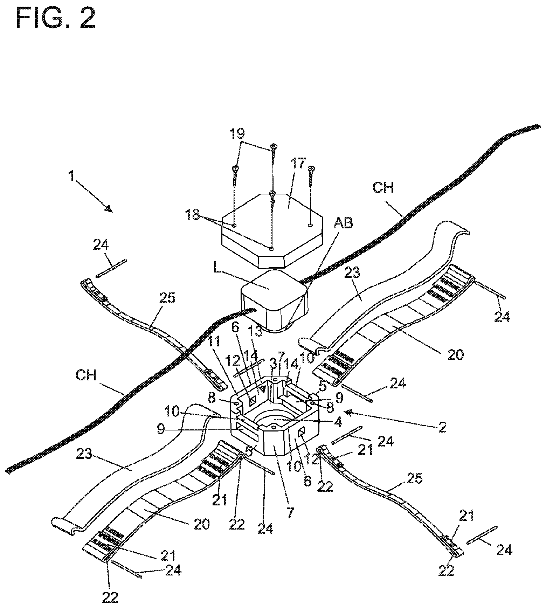

Figure 2 - view according to the previous figure with the LED and its cable harness aligned with the case and the side strips;
Figure 3 - schematic view indicating the introduction of the end of the lateral strip by the through cutouts, followed by a pivot pin being inserted in the said eye;
Figure 4 - representative view of the assembly of the other strips. For this purpose the ends of the side strip, and the support strips are anchored by their pivot pins to the support walls in their respective cutouts.

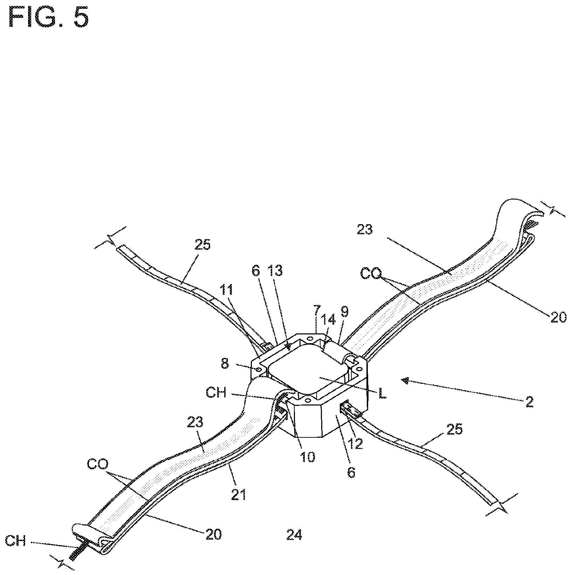

Figure 5 - view according to the previous figure, with the LED positioned inside the case and with its caber harness seated on the side recesses followed by the coating of the protective strip seamed on the side strip, so that the cable harness is kept in a fully protected condition. Tn this condition surplus length in the material of the protective strips create free ends that are positioned inside the case;

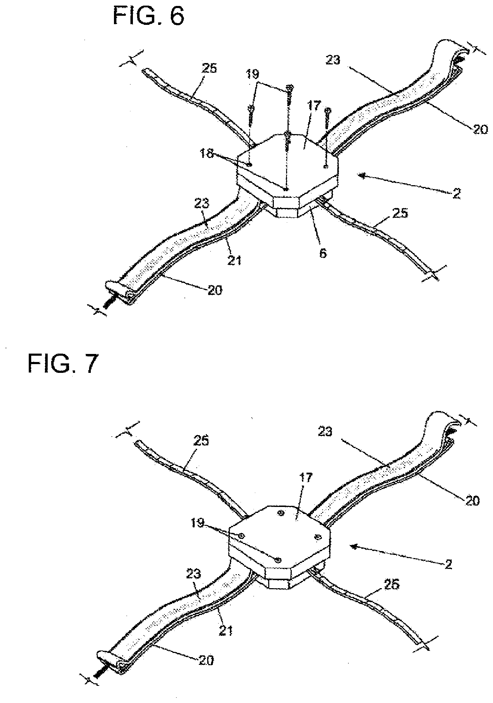

Figures 6 and 7 - sequential views according to the previous figure, showing the cover being installed over the case which protects the LED and the free ends of the protective strip, followed by the screwing through its holes that match the holes on the edge of the case:

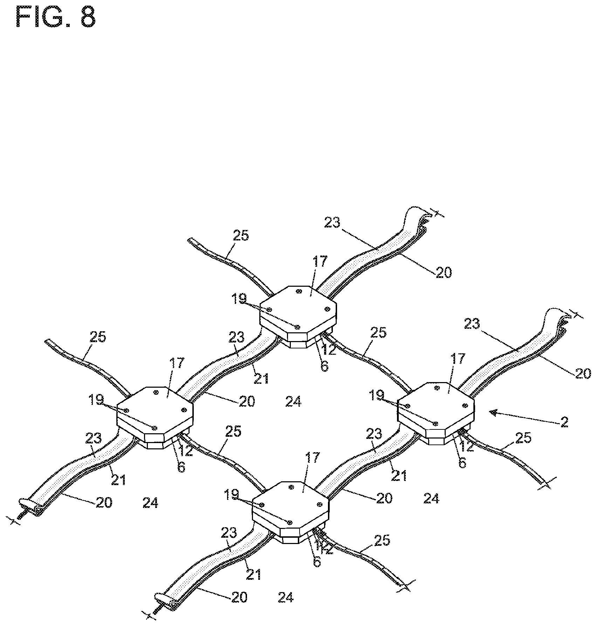

Figure 8 - view according to previous figure, with a series of units mounted sequentially forming a mesh:

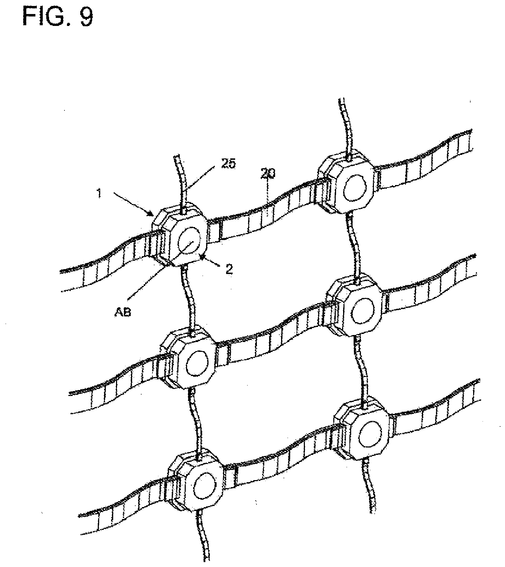

Figure 9 - view according to the previous figure of the mesh, but frontally represented, where the luminous dome of the LED is exposed;

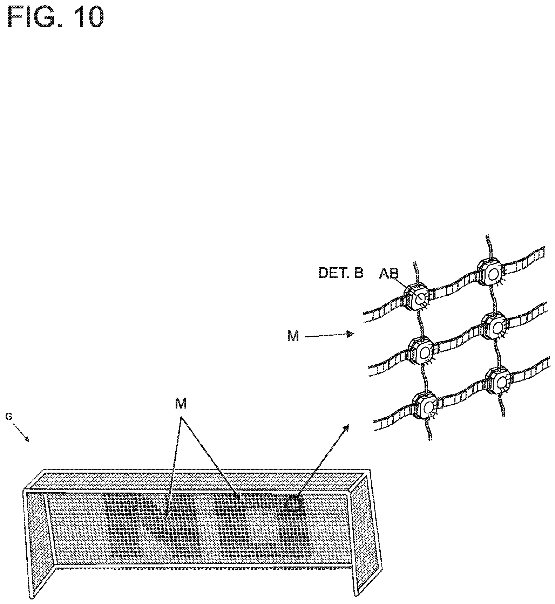

Figure 10 - view according to the previous figure of the mesh positioned in the structure of a "goal", forming a luminous sports net which is highly resistant to impact, and detail B showing the lit LEDs forming the pre-programmed image coming from a controller (not shown).

According to the accompanying drawings, the invention, "IMPROVEMENT FOR LUMINOUS SPORTS NET" is related to a set (1) consisting of a case (2) provided with a bottom (3) with conical hole (4) surrounded by side walls (5) and transverse walls (6), as well as chamfered vertexes (7) with upper holes (8). As a result, the said side walls (5) are provided with through cutouts (9) that are aligned with a recess (10) of an edge (11), while the transverse walls (6) receive similar minor cutouts (12) that define a cradle (13) with support walls (14).

The edge (11) is demarcated by flaps (15) with recesses (16) of a cover (17) with holes (18) for screws (19).

The through cutouts (9) align with their corresponding side strips (20) formed by their folded and stitched ends (21) composing an eye (22), in order for the said strip (20) to receive the overlap, also by seaming (CO), of a protective strip (23), as its eyes (22) are matched with pins (24). The minor cutouts (12) are provided with a support strip (25) as well as folds and seams (21) forming eyes (22), but this support strip is not provided with a protective strip (23).

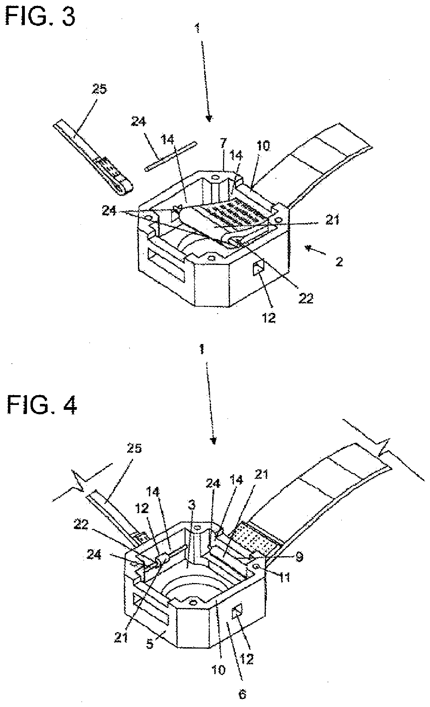

The set composed this way will be used to form a luminous sports net provided with LEDs. For its assembly, the eyes (22) of both strips (20) and (25) are inserted in their respective cutouts (9) and (12) so that its eye enters the inside area of the case (2). Tn the next step the pivot pin (24) is inserted in the eye (22) so it reaches the other side allowing the strips (20) and (25) to be pulled until the pivot pins (24) abut their respective support walls (14), creating strong anchoring to the ends of the strips (20) and (25) inside the case (2) as shown in Figure 4. The same occurs at the opposite ends, by adding new cases (2) and repeating the process until a mesh (M) is formed.

When inserting the LEDs (L) into the cradle (13), its dome (AB) rests under the conical hole (4), so that it is visible from the other side of the bottom (3) of the case (2), therefore its cable harness (CH) passes over the recess (10) and runs over the surface of the side strip (20) until its opposite end reaches the LED (L) housed in the next box (2). In this condition, the protective strip (23) overlaps the cable harness (CH), followed by seaming (CO) on its edges creating ends free to be connected, and thus the said cable harness (CH) is kept protected inside, so that the same overlap occurs on the next side strips (20). The case (2) is then completed with the fitting of the cover (17), which avoids interference of the ends of the protective strip (23) in the inside area of the case by means of compensation of the space generated by the recesses (16), and then the cover (17) is locked over the case (2) by inserting the screws (19) into the holes (18) and (8), these steps being repeated until all cases (2) of the mesh (M) are properly closed.

After the assembly is completed the mesh (M) is then positioned on the goalposts (G), in order for the ends of the columns formed by the support strips (25), to be anchored to the rear posts of the goal (G), while the ends of the rows formed by the si de strips (20) are also attached to the side structures of the rear of the goalposts (G), so the LEDs (L) are facing the inside of the goalpost (G).

Such construction allows all the net's traction to be supported on the straps (20) and (25), which guarantees the integrity of the cable hardness (CH) connected to the controllers (not shown), in addition to shielding the LEDs (L) against water and the exposure to weather conditions.

## Claims

1. Improvement to illuminated sports net, wherein the improvement comprises a set (1) disclosing a case (2) which accommodates a LED (L), wherein the case (2) discloses a bottom (3) with a conical hole (4), wherein the case (2) is composed by side walls (5), transverse walls (6), and chamfered vertexes (7) with upper holes (8) wherein the side walls (5) are respectively provided with a respective recess (10) on an edge (11) , and with through cut-outs (9) that align in a substantially parallel direction with each of the recesses (10) of the edge (11), wherein the transverse walls (6) are provided similarly with minor cut-outs (12), wherein the through cut-outs (9) and the minor cut-outs (12) give access to an inner cradle (13) which discloses inner support walls (14) for pivot pins (24), wherein pivot pins (24) are provided inside of the inner cradle (13) and are respectively surrounded by respective eyes (22) of folded and seamed ends (21) of support strips (25) and side strips (20), wherein each of the side strips (20) is provided with a protective strip (23) joined to it by a seam (CO), so that each of the protective strips (23) surrounds a cable harness (CH) which extends to the inside of the case (2) , wherein the set (1) also discloses a cover (17) with flaps (15) with recesses (16) delimiting the cover (17), and the cover (17) also has holes (18) for screws (19), in which the respective free ends of the protective strips (23) are kept inside the box (2) by overlapping the edge (11) with the flaps (15) provided with recesses (16) delimiting the cover (17), where the cover (17) is fixed to the upper holes (8) by screws (19) inserted through the screw holes (18) for the screws.

2. Enhancement for luminous sports net according to claim 1, wherein the set (1) forms a luminous sports mesh (M) resistant to water and impacts.

## Patentansprüche

1. Verbesserung eines beleuchteten Sportnetzes, **dadurch gekennzeichnet, dass** die Verbesserung aus einer Zusammenstellung (1) besteht, welche ein Gehäuse (2) umfasst, in welchem sich eine LED (L) befindet, dass sich an der Unterseite (3) des Gehäuses (2) eine konische Bohrung (4) befindet, dass sich Gehäuse (2) aus Seitenwänden (5), Querwänden (6) und angefasten Ecken (7) mit Bohrungen oben (8) besteht, dass die Seitenwände (5) jeweils mit einer Aussparung (10) an einer Kante (11) und mit Ausschnitten (9), die im Wesentlichen parallel zu jeder der Aussparungen (10) der Kanten (11) verlaufen, versehen sind, dass die Querwände (6) auf ähnliche Weise mit kleineren Ausschnitten (12) versehen sind, dass die Ausschnitte (9) und die kleineren Ausschnitte (12) eine innere Halterung (13) zugänglich machen, die innere Stützwände (14) für Lagerbolzen (24) umfasst, dass sich Lagerbolzen (24) im Inneren der inneren Halterung (13) befinden, welche jeweils von Ösen (22) aus gefalteten und gesäumten Enden (21) von Stützstreifen (25) und Seitenstreifen (20) umgeben sind, dass jeder der Seitenstreifen (20) mit einem Schutzstreifen (23) versehen ist, welcher mittels einer Naht (CO) mit diesem verbunden ist, sodass jeder der Schutzstreifen (23) einen Kabelbaum (CH) umgibt, der ins Innere des Gehäuses (2) führt, dass die Zusammenstellung (1) ferner eine Abdeckung (17) mit Klappen (15) umfasst, welche Aussparungen (16) an den Grenzen der Abdeckung (17) haben, und dass die Abdeckung (17) ferner Bohrungen (18) für Schrauben (19) hat, durch die die jeweiligen losen Enden der Schutzstreifen (23) in das Gehäuse (2) verlaufen, indem sie über die Kante (11) mit den mit Aussparungen (16) versehenen Klappen (15) an den Grenzen der Abdeckung (17) verlaufen, dass die Abdeckung (17) an den Bohrungen oben (8) mittels Schrauben (19) befestigt ist, die durch die Bohrungen (18) für die Schrauben durchgeführt sind

2. Verbesserung eines beleuchteten Sportnetzes gemäß Patentanspruch 1, **dadurch gekennzeichnet, dass** die Zusammenstellung (1) ein beleuchtetes Sport

## Revendications

1. Amélioration du filet de sport illuminé, où l'amélioration comprend un ensemble (1) présentant un boîtier (2) qui contient une LED (L), où le boîtier (e) présente un fond (3) avec un trou conique (4), où le boîtier (2) est composé de parois latérales (5), de parois transversales (6), et de sommets chanfreinés (7) avec des trous supérieurs (8), où les parois latérales (5) sont respectivement fournies avec une cavité respective (10) sur un bord (11), et avec des découpes de tout le long (9) qui s'alignent dans une direction parallèle substantielle à chacune des cavités (10) du bord (11), où les parois transversales (6) sont fournies de manière similaire aux découpes mineures (12), où les découpes de tout le long (9) et les découpes mineures (12) donnent accès à une nacelle interne (13) qui présente des murs de support internes (14) pour des axes de pivotement (24), où les axes de pivotement (24) sont fournis à l'intérieur de la nacelle interne (13) et sont respectivement entourés par des yeux respectifs (22) des extrémités pliées et cousues (21) des bandes de support (25) et des bandes latérales (20), où chacune des bandes latérales (20) est fournie avec une bande de protection (23) qui y est jointe par une couture (CO), afin que chacune des bandes de protection (23) entoure un faisceau de câbles (CH) qui s'étend vers l'intérieur du boîtier (2), où l'ensemble (1) présente également un couvercle (17) avec des rabats (15) avec des cavités (16) qui délimitent le couvercle (17), et le couvercle (17) possède également des trous (18) pour les vis (19), dans lesquelles les respectives extrémités libres des bandes de protection (23) sont conservées à l'intérieur de la boîte (2) en chevauchant le bord (11) avec les rabats (15) fournis avec des cavités (16) qui délimitent le couvercle (17), où le couvercle (17) est fixé sur les trous supérieurs (8) par les vis (19) insérées à travers les trous de vis (18) pour les vis.

2. Amélioration du filet de sport lumineux selon la revendication 1, où l'ensemble (1) forme des sports lumineux.
